# EUROPÄISCHE PATENTANMELDUNG

(11) **EP 2 062 692 A2**
(43) Veröffentlichungstag der Anmeldung: **27.05.2009**
(21) Anmeldenummer: 08018974.9
(22) Anmeldetag: 30.10.2008
(51) Int. Cl.: B25B 31/00, F16B 43/00

(54) **Klemmscheiben-Handhabe**

(30) Priorität: 22.11.2007 DE 202007016415 U
(71) Anmelder: Hazet-Werk Hermann Zerver GmbH & Co. KG, D-42857 Remscheid (DE)
(72) Erfinder: Beyert, Thomas, 51645 Gummersbach (DE)
(74) Vertreter: Ksoll, Peter

(57) **Zusammenfassung**

Die Erfindung betrifft eine Klemmscheiben-Handhabe zur Montage von Klemmscheiben auf Stehbolzen bzw. zur Demontage der Klemmscheiben von den Stehbolzen, wobei die Klemmscheiben einen Außenkranz und einen konisch ausgebildeten Spannbereich aufweisen, welcher aus zur Klemmscheibenachse gerichteten Klemmzungen gebildet ist. Die Klemmscheiben-Handhabe umfasst eine Steckhülse (1), die eine zentrale Bolzenaufnahme (19) und eine Druckfläche (21) aufweist, wobei zwischen der Bolzenaufnahme (19) und der Druckfläche (21) ein Freiraum (23) für die Klemmzungen und stirnseitig der Steckhülse (1) Mitnehmer (25) zum Eingriff in Ausnehmungen der Klemmscheibe vorgesehen sind. Die Steckhülse (1) ist lösbar mit einem Handgriff kuppelbar. Hierzu ist in Verlängerung zur Bolzenaufnahme (19) ein Innenmehrkant (36) vorgesehen, mit dem die Steckhülse (1) auf einen Außenmehrkant des Handgriffs aufgesteckt und dort mittels eines Sperrkörpers verriegelt wird.

## Beschreibung

Die Erfindung betrifft eine Klemmscheiben-Handhabe zur Montage und/oder Demontage von Klemmscheiben auf bzw. von Stehbolzen.

Klemmscheiben sind allgemein bekannt. Hierbei handelt es sich um ein Schnellmontageelement, welches in großer Zahl, insbesondere im Fahrzeugbau, eingesetzt wird, beispielsweise um an einem Trägerkörper oder -blech Anbauteile, wie Dämmmatten und ähnliches, zu befestigen.

Die Klemmscheiben weisen üblicherweise einen kreisrunden Außenkranz auf, der insbesondere federnd ausgebildet ist. Innerhalb des Außenkranzes besitzen die Klemmscheiben einen konisch gestalteten, selbstsperrenden Spannbereich, der aus zur Klemmscheibenachse gerichteten Klemmzungen gebildet ist. Bei der Montage der Anbauteile wirken die Klemmscheiben mit einem Stehbolzen zusammen, der fest auf dem Trägerkörper festgelegt ist und etwa senkrecht von diesem absteht. Üblicherweise sind die Stehbolzen mit einem Außengewinde versehen. Nach Positionierung der Anbauteile an dem Trägerkörper werden die Klemmscheiben auf die Stehbolzen aufgeschoben und die Anbauteile zwischen dem Trägerkörper und den Klemmscheiben eingespannt. Der Spannbereich bzw. die Klemmzungen umgreifen hierbei den Stehbolzen und verrasten mit diesem unter federnder Vorspannung, wobei sich die Klemmzungen am Außengewinde des Stehbolzens abstützen.

Beispiele für Klemmscheiben gehen aus der DE 10 2006 011 419 A1, der DE 199 16 809 A1 oder der DE 199 55 416 A1 hervor.

Die Montage der Klemmscheiben ist einfach und kann relativ schnell durchgeführt werden. Wie ausgeführt, brauchen hierzu die Klemmscheiben nur auf den Stehbolzen aufgesteckt zu werden. Dies kann händisch unter Zuhilfenahme eines Andrückwerkzeuges erfolgen.

Deutlich schwieriger ist die Demontage einer festgelegten Klemmscheibe von einem Stehbolzen. Die Klemmscheiben müssen hierzu entgegen der Klemmwirkung des Spannbereichs vom Stehbolzen abgezogen werden, was sich als umständlich und zeitaufwändig erweist.

Der Erfindung liegt ausgehend vom Stand der Technik die Aufgabe zu Grunde, eine für den praktischen Einsatz verbesserte Klemmscheiben-Handhabe zur Montage und insbesondere zur Demontage von Klemmscheiben auf bzw. von Stehbolzen zu schaffen.

Die Lösung dieser Aufgabe besteht nach der Erfindung in einer Klemmscheiben-Handhabe gemäß Anspruch 1.

Vorteilhafte Ausgestaltungen und Weiterbildungen des grundsätzlichen Erfindungsgedankens sind Gegenstand der abhängigen Ansprüche 2 bis 12.

Erfindungsgemäß weist die Klemmscheiben-Handhabe eine Steckhülse mit einer zentralen Bolzenaufnahme und einer Druckfläche auf, wobei zwischen der Bolzenaufnahme und der Druckfläche ein Freiraum zur Aufnahme der Klemmzungen vorgesehen ist und die Steckhülse stirnseitig Mitnehmer zum Eingriff in Ausnehmungen der Klemmscheibe aufweist. Vorzugsweise ist der Freiraum trichterförmig ausgebildet.

Die erfindungsgemäße Klemmscheiben-Handhabe kann sowohl zur Montage als auch zur Demontage von Klemmscheiben auf bzw. von Stehbolzen genutzt werden. Zur Montage werden die Klemmscheiben stirnseitig an die Steckhülse angelegt. Hierbei gelangt die Druckfläche am Außenkranz zur Anlage und die Klemmzungen liegen im Freiraum. Die Klemmscheibe wird dann auf einen Stehbolzen mit Hilfe der Klemmscheiben-Handhabe aufgeschoben. Beim Aufschieben taucht der Stehbolzen in die Bolzenaufnahme ein und die Klemmzungen werden durch den Stehbolzen gespreizt. Die Klemmzungen stützen sich am Außengewinde des Stehbolzens ab und ein Anbauteil wird zwischen dem Trägerkörper bzw. -blech und der Klemmscheibe eingespannt.

Zur Demontage einer Klemmscheibe von einem Stehbolzen wird der Steckhülse an die entsprechende Klemmscheibe angesetzt. Hierbei gelangen die Mitnehmer in Ausnehmungen der Klemmscheibe zum Eingriff. Bei den Ausnehmungen kann es sich um Zwischenräume bzw. Schlitze zwischen Klemm- bzw. Federzungen oder separat vorgesehenen Ausnehmungen, wie Durchbrechungen, in den Klemmscheiben handeln. Anschließend wird die Klemmscheibe vom Stehbolzen in einer Dreh- bzw. Schraubbewegung heruntergedreht. Die Demontage ist einfach, schnell und sicher auszuführen. Der kompakte und einfache Aufbau der Steckhülse vermeidet ein Abrutschen beim Demontagevorgang, so dass auch eine Verletzungsgefahr vermindert ist.

Je nach Ausführungsform der Klemmscheiben weist die Steckhülse eine hierauf angepasste Gestaltung der Bolzenaufnahme, der Druckfläche, des Freiraums und der Mitnehmer auf.

Vorzugsweise sind die Mitnehmer stiftförmig gestaltet und verlaufen parallel zur Längsachse der Steckhülse. Die Mitnehmer können in der Druckfläche angeordnet sein. Hierbei sind die Mitnehmer vorzugsweise in Quernuten der Druckfläche vorgesehen.

Bei einer alternativen Ausführungsform sind die Mitnehmer am Übergang zwischen dem Freiraum und der Druckfläche angeordnet.

Die Druckfläche kann plan bzw. eben und umlaufend an der Stirnseite der Steckhülse vorgesehen sein. Bei einer anderen Ausführungsform erweitert sich die Druckfläche vom Freiraum zur Stirnseite der Steckhülse hin.

Die Steckhülse kann abgeflachte Außenwandbereiche aufweisen. Diese Ausführungsform kommt insbesondere bei Klemmscheiben zum Einsatz, die mit einer Distanzscheibe zusammenwirken, wie sie in der DE 10 2006 011 419 A1 beschrieben sind. Die Distanzscheibe ist über Haltekrallen mit der Klemmscheibe verbunden. Die abgeflachten Außenwandbereiche der Steckhülse bilden Freiflächen für die Haltekrallen, so dass die Steckhülse an die Klemmscheibe angesetzt werden kann, ohne mit den Haltekrallen zu kollidieren.

Die erfindungsgemäße Klemmscheiben-Handhabe kann sowohl händisch als auch motorisch betätigt werden. Hierzu ist die Steckhülse vorzugsweise lösbar mit einem Handgriff kuppelbar. In Verlängerung der Bolzenaufnahme besitzt die Steckhülse zweckmäßigerweise einen Innenmehrkant zur Kupplung mit einem Handgriff oder einem motorischen Antrieb.

Die Erfindung ist nachfolgend anhand von Ausführungsbeispielen näher beschrieben. Es zeigen:
- Figur 1: eine erste Ausführungsform einer Steckhülse einer erfindungsgemäßen Klemmscheiben-Handhabe in einer Schnittdarstellung;
- Figur 2: einen Querschnitt durch eine erste Ausführungsform einer Klemmscheibe;
- Figur 3: die Klemmscheibe gemäß der Figur 2 in der Draufsicht;
- Figur 4: eine zweite Ausführungsform einer Steckhülse einer erfindungsgemäßen Klemmscheiben-Handhabe in einer Schnittdarstellung;
- Figur 5: einen Querschnitt durch eine zweite Ausführungsform einer Klemmscheibe;
- Figur 6: die Klemmscheibe gemäß der Figur 5 in der Draufsicht;
- Figur 7: einen Handgriff zur Kupplung mit einer Steckhülse;
- Figur 8: die Steckhülse gemäß der Figur 1 in einer Seitenansicht;
- Figur 9: die Schnittdarstellung der Steckhülse entsprechend der Figur 1;
- Figur 10: die Steckhülse in der Draufsicht;
- Figur 11: die Steckhülse gemäß der Figur 4 in einer Seitenansicht;
- Figur 12: die Schnittdarstellung der Steckhülse entsprechend der Figur 4 und
- Figur 13: die Steckhülse in der Draufsicht.

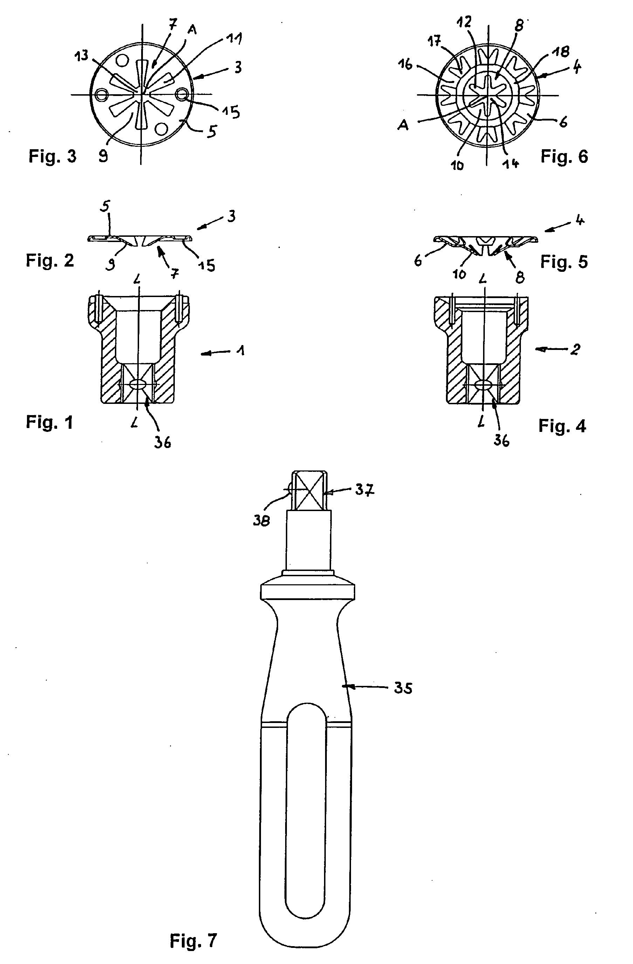

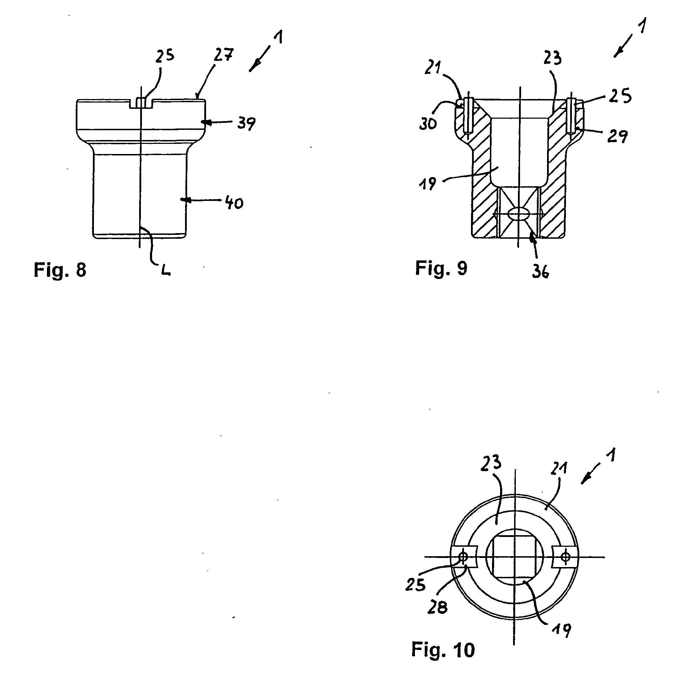

Anhand der Figuren 1 sowie 8 - 10 ist eine erste Ausführungsform einer Steckhülse 1 einer erfindungsgemäßen Klemmscheiben-Handhabe beschrieben.

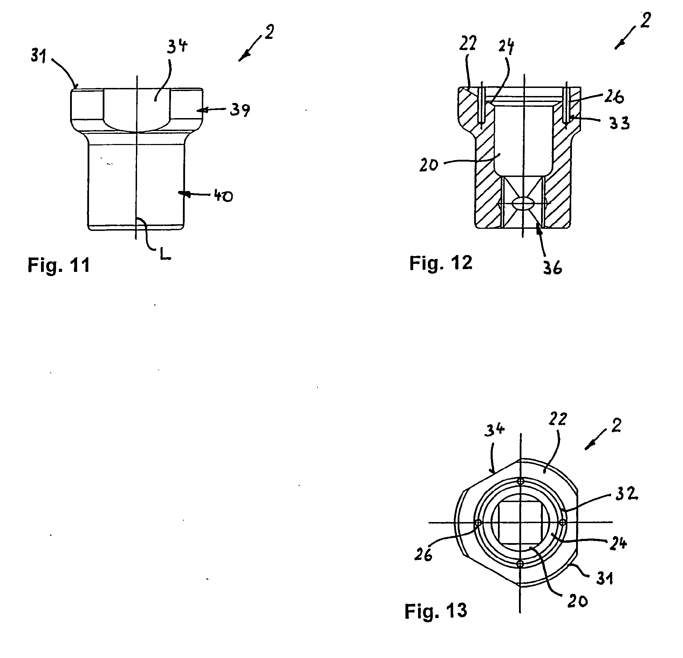

Die Figuren 4 sowie 11 - 13 zeigen eine zweite Ausführungsform einer Steckhülse 2 einer erfindungsgemäßen Klemmscheiben-Handhabe.

Die Steckhülse 1 kommt zum Einsatz, um eine Klemmscheibe 3, wie sie in den Figuren 2 und 3 dargestellt ist, auf einen hier nicht dargestellten Stehbolzen zu montieren bzw. von diesem zu demontieren. Die Steckhülse 2 dient zur Montage bzw. Demontage einer Klemmscheibe 4, wie sie in den Figuren 5 und 6 dargestellt ist.

Die Klemmscheiben 3 bzw. 4 werden verwendet, um Anbauteile an einem Trägerkörper festzulegen. Hierzu sind am Trägerkörper außenprofilierte, üblicherweise mit einem Außengewinde versehene Stehbolzen vorgesehen, auf welche die Klemmscheiben 3, 4 aufgesteckt werden. Hierbei werden die Anbauteile zwischen dem Trägerkörper und den Klemmscheiben 3, 4 eingespannt und festgelegt.

Die Klemmscheiben 3, 4 weisen einen insbesondere federnd ausgebildeten Außenkranz 5, 6 und einen konisch gestalteten, selbstsperrenden Spannbereich 7, 8 auf, der aus zur Klemmscheibenachse A gerichteten Klemmzungen 9, 10 gebildet ist. Zwischen den Klemmzungen 9, 10 sind schlitzförmige Ausnehmungen 11, 12 vorhanden, die in eine zentrale Öffnung 13, 14 zur Durchführung eines Stehbolzens münden.

Bei der Klemmscheibe 3, wie anhand der Figuren 2 und 3 zu erkennen, sind des Weiteren im Außenkranz 5 kreisrunde Ausnehmungen 15 vorgesehen.

Bei der Klemmscheibe 4 ist, wie anhand der Figuren 5 und 6 zu erkennen, auch der Außenkranz 6 konisch gestaltet und mit Federzungen 16 und Ausnehmungen 17 versehen, um dem Außenkranz 6 eine Federcharakteristik zu verleihen. Der Außenkranz 6 geht über einen eben ausgebildeten Ring 18 in den Spannbereich 8 über.

Sowohl die Steckhülse 1 als auch die Steckhülse 2 weisen eine zentrale Bolzenaufnahme 19, 20 auf, die durch eine zentrische Bohrung gebildet ist. Weiterhin ist eine Druckfläche 21, 22 vorgesehen. Zwischen der Bolzenaufnahme 19, 20 und der Druckfläche 21, 22 ist ein insbesondere konisch bzw. trichterförmig ausgebildeter Freiraum 23, 24 zur Aufnahme der Klemmzungen 9, 10 vorgesehen. Ferner sind stirnseitig an der Steckhülse 1, 2 Mitnehmer 25, 26 in Form von Stiften zum Eingriff in die Ausnehmungen 15 bzw. 17 der Klemmscheiben 1, 2 vorgesehen.

Bei der Steckhülse 1 ist die Druckfläche 21 an der Stirnseite 27 plan ausgebildet. In der Druckfläche 21 sind zwei sich diametral gegenüberliegende Quernuten 28 vorgesehen. Mittig in den Quernuten 28 ist jeweils ein Mitnehmer 25 angeordnet. Wie erwähnt, werden die Mitnehmer 25 von Stiften gebildet. Diese sind in Sackbohrungen 29 im Werkzeugkopf 1 gehalten. Die Mitnehmer 25 verlaufen parallel zur Längsachse L der Steckhülse 1 und ragen vom Nutgrund 30 in Richtung zur Stirnseite 27. Sie stehen geringfügig gegenüber der Stirnseite 27 vor.

Bei der Steckhülse 2 ist die Druckfläche 22 konisch ausgebildet und läuft in die Stirnseite 31 aus. Zwischen dem Freiraum 24 und der Druckfläche 22 ist ein plan umlaufender Übergangsabschnitt 32 vorgesehen. Es sind insgesamt vier stiftförmige Mitnehmer 26 vorgesehen, welche jeweils um 90° versetzt im Übergangsschnitt 32 am Übergang zwischen dem Freiraum 24 und der Druckfläche 22 angeordnet sind. Auch die Mitnehmer 26 sind in Sackbohrungen 33 in der Steckhülse 2 festgelegt und verlaufen parallel zur Längsachse L der Steckhülse 2.

Man erkennt des Weiteren, dass die Steckhülse 2 abgeflachte Außenwandbereiche 34 aufweist. Diese dienen als Freiflächen für in Richtung zur Steckhülse 2 vorstehende Scheibenkomponenten, der Klemmscheibe 4 oder für mit der Klemmscheibe 4 zusammenwirkende weitere Komponenten, beispielsweise Haltekrallen einer Distanzscheibe.

Zur Betätigung der Steckhülsen 1 bzw. 2 sind diese mit einem Handgriff 35, wie er in der Figur 7 dargestellt ist, kuppelbar. Hierfür weisen die Steckhülsen 1, 2 in Verlängerung der Bolzenaufnahme 19, 20 einen Innenmehrkant 36 auf. Der Handgriff 35 ist mit einem entsprechend gegengleich ausgebildeten Außenmehrkant 37 versehen, in dem ein federbelasteter Sperrkörper 38 angeordnet ist. Zur Kupplung der Steckhülse 1 bzw. 2 wird diese mit dem Innenmehrkant 36 auf den Außenmehrkant 37 aufgesteckt und mittels des Sperrkörpers 38 verriegelt. Über den Innenmehrkant 36 können die Steckhülsen 1, 2 auch mit einem motorischen Antrieb gekuppelt werden.

Man erkennt des Weiteren, dass die Steckhülsen 1 bzw. 2 zwei im Durchmesser verschiedene Längenabschnitte 39, 40 aufweisen, wobei der erste kopfseitige Längenabschnitt 39 im Durchmesser größer ausgeführt ist als der zweite kupplungsseitige Längenabschnitt 40.

Zur Montage einer Klemmscheibe 3 bzw. 4 werden diese stirnseitig an die Steckhülse 1 bzw. 2 angelegt. Die Druckflächen 21, 22 liegen am Außenkranz 5, 6 an. Die Klemmzungen 9, 10 liegen im trichterförmigen Freiraum 23, 24. Mit Hilfe der Klemmscheiben-Handhabe werden die Klemmscheiben 3, 4 auf einen mit einem Außengewinde versehenen Stehbolzen aufgesteckt und ein Anbauteil mit einem Trägerkörper verspannt.

Zur Demontage einer auf einem Stehbolzen festgelegten Klemmscheibe 3 bzw. 4 wird die Steckhülse 1, 2 der Klemmscheibe-Handhabe an die Klemmscheibe 3, 4 angesetzt. Bei der Klemmscheibe 3 und der Steckhülse 1 greifen hierbei die Mitnehmer 25 in die kreisrunden Ausnehmungen 15 im Außenkranz 5 ein.

Bei der Klemmscheibe 4 und der Steckhülse 2 greifen die Mitnehmer 26 in die Ausnehmungen 17 im Außenkranz 6.

Die Klemmscheiben-Handhabe wird bzw. die Steckhülsen 1, 2 werden mit Hilfe des Handgriffs 35 gedreht. Hierbei nehmen die Mitnehmer 25, 26 die Klemmscheibe 3 bzw. 4 mit, so dass die Klemmscheiben 3, 4 entlang des Außengewindes am Steckzapfen von diesem abgedreht werden. Die Drehbewegung erfolgt je nach Ausführungsform des Außengewindes des Steckzapfens links- oder rechtsgängig. Auf diese Weise ist eine einfache, schnelle und sichere Demontage einer Klemmscheibe 3 bzw. 4 von einem Steckzapfen möglich. Nach Entfernen der Klemmscheiben 3 bzw. 4 können die Anbauteile vom Trägerkörper abgenommen werden.

### Bezugszeichen:

- 1-: Steckhülse
- 2-: Steckhülse
- 3-: Klemmscheibe
- 4-: Klemmscheibe
- 5-: Außenkranz
- 6-: Außenkranz
- 7-: Spannbereich
- 8-: Spannbereich
- 9-: Klemmzunge
- 10-: Klemmzunge
- 11-: Ausnehmung
- 12-: Ausnehmung
- 13-: Öffnung
- 14-: Öffnung
- 15-: Ausnehmung
- 16-: Federzunge
- 17-: Ausnehmung
- 18-: Ring
- 19-: Bolzenaufnahme
- 20-: Bolzenaufnahme
- 21 -: Druckfläche
- 22-: Druckfläche
- 23-: Freiraum
- 24-: Freiraum
- 25-: Mitnehmer
- 26-: Mitnehmer
- 27-: Stirnseite v. 1
- 28-: Quernut
- 29-: Sackbohrung
- 30-: Nutgrund
- 31-: Stirnseite v. 2
- 32 -: Übergangsabschnitt
- 33-: Sackbohrung
- 34-: Außenwandbereich
- 35-: Handgriff
- 36-: Innenmehrkant
- 37-: Außenmehrkant
- 38-: Sperrkörper
- 39-: Längenabschnitt
- 40-: Längenabschnitt
- A -: Klemmscheibenachse
- L-: Längsachse v. 1 bzw. 2

## Patentansprüche

1. Klemmscheiben-Handhabe zur Montage von Klemmscheiben (3, 4) auf Stehbolzen bzw. zur Demontage der Klemmscheiben (3, 4) von den Stehbolzen, wobei die Klemmscheiben (3, 4) einen Außenkranz (5, 6) und einen konisch ausgebildeten Spannbereich (7, 8) aufweisen, welcher aus zur Klemmscheibenachse (A) gerichteten Klemmzungen (9, 10) gebildet ist, **gekennzeichnet durch** eine Steckhülse (1, 2), welche eine zentrale Bolzenaufnahme (19, 20) und eine Druckfläche (21, 22) aufweist, wobei zwischen der Bolzenaufnahme (19, 20) und der Druckfläche (21, 22) ein Freiraum (23, 24) für die Klemmzungen (9, 10) und stirnseitig der Steckhülse (1, 2) Mitnehmer (25, 26) zum Eingriff in Ausnehmungen (15, 17) der Klemmscheibe (3, 4) vorgesehen sind.

2. Klemmscheiben-Handhabe nach Anspruch 1, **dadurch gekennzeichnet, dass** die Mitnehmer (25, 26) stiftförmig gestaltet sind und parallel zur Längsachse (L) der Steckhülse (1, 2) verlaufen.

3. Klemmscheiben-Handhabe nach Anspruch 1 oder 2, **dadurch gekennzeichnet, dass** die Mitnehmer (25) in der Druckfläche (21) angeordnet sind.

4. Klemmscheiben-Handhabe nach Anspruch 3, **dadurch gekennzeichnet, dass** die Mitnehmer (25) in Quernuten (28) der Druckfläche (21) vorgesehen sind.

5. Klemmscheiben-Handhabe nach Anspruch 1 oder 2, **dadurch gekennzeichnet, dass** die Mitnehmer (26) am Übergang zwischen dem Freiraum (24) und der Druckfläche (22) angeordnet sind.

6. Klemmscheiben-Handhabe nach einem der Ansprüche 1 bis 5, **dadurch gekennzeichnet, dass** die Druckfläche (22) konisch ausgebildet ist und sich vom Freiraum (24) zur Stirnseite (31) der Steckhülse (2) erweitert.

7. Klemmscheiben-Handhabe nach einem der Ansprüche 1 bis 6, **dadurch gekennzeichnet, dass** der Freiraum (23, 24) trichterförmig ausgebildet ist.

8. Klemmscheiben-Handhabe nach einem der Ansprüche 1 bis 7, **dadurch gekennzeichnet, dass** die Steckhülse (2) abgeflachte Außenwandbereiche (34) aufweist.

9. Klemmscheiben-Handhabe nach wenigstens einem der Ansprüche 1 bis 8, **dadurch gekennzeichnet, dass** die Steckhülse (1, 2) lösbar mit einem Handgriff (35) kuppelbar ist.

10. Klemmscheiben-Handhabe nach Anspruch 9, **dadurch gekennzeichnet, dass** die Steckhülse (1, 2) in Verlängerung der Bolzenaufnahme (19, 20) mit einem Innenmehrkant (36) zur Kupplung mit dem Handgriff (35) versehen ist.

11. Klemmscheiben-Handhabe nach wenigstens einem der Ansprüche 1 bis 8, **dadurch gekennzeichnet, dass** die Steckhülse (1, 2) lösbar mit einem motorischen Antrieb kuppelbar ist.

12. Klemmscheiben-Handhabe nach Anspruch 11, **dadurch gekennzeichnet, dass** die Steckhülse (1, 2) in Verlängerung der Bolzenaufnahme (19, 20) mit einem Innenmehrkant (36) zur Kupplung mit dem motorischen Antrieb versehen ist.
